(19) **Europäisches Patentamt**

**European Patent Office**

**Office européen des brevets**

(11) **EP 1 662 680 B1**

(12) **EUROPEAN PATENT SPECIFICATION**

(45) Date of publication and mention
of the grant of the patent:
**27.12.2006 Bulletin 2006/52**

(51) Int Cl.:
***H04B 10/18*** *(2006.01)*

(21) Application number: **04292784.8**

(22) Date of filing: **25.11.2004**

(54) **Optical receiver and method for chromatic dispersion compensation**

Optischer Empfänger und Verfahren zur Kompensation der chromatischen Dispersion

Récepteur optique et méthode pour la compensation de la dispersion chromatique

(84) Designated Contracting States:
**AT BE BG CH CY CZ DE DK EE ES FI FR GB GR HU IE IS IT LI LU MC NL PL PT RO SE SI SK TR**

(43) Date of publication of application:
**31.05.2006 Bulletin 2006/22**

(73) Proprietor: **ALCATEL**
**75008 Paris (FR)**

(72) Inventors:
• **Seguineau, Frederic**
**75008 Paris (FR)**
• **Lavigne, Bruno**
**92160 Antony (FR)**
• **Leclerc, Olivier**
**91700 St Geneuviève des Bois (FR)**

(74) Representative: **Rausch, Gabriele**
**Alcatel**
**Intellectual Property Department Stuttgart**
**70430 Stuttgart (DE)**

(56) References cited:
**EP-A- 1 251 647       US-A1- 2004 000 635**
**US-A1- 2004 156 038**

**Description**

Background of the invention

The invention relates to an optical receiver for an optical network comprising a dispersion compensation module for adjusting an amount of chromatic dispersion of optical signals transmitted through the optical network, a nonlinear optical element for spectral broadening of a dispersion probe signal transmitted through the optical network arranged in a dispersion measuring path downstream of the dispersion compensation module, and a power measuring means for measuring an average power of the optical dispersion probe signal over a predetermined frequency range arranged downstream of the nonlinear optical element in the dispersion measuring path, and an analysis filter placed between the nonlinear optical element and the power measuring means.

In an optical transmission system, the presence of chromatic dispersion leads to pulse broadening, so that control of chromatic dispersion represents a crucial issue for long-haul optical transmission systems and also for future transparent/hybrid networks as for example at the input of OADM or crossconnect. Dispersion compensation control requires a control signal that is used to drive a dispersion compensation module so that the chromatic dispersion cumulated during transmission can be reduced to almost zero.

For chromatic dispersion control, various solutions are existing. One of the most commonly used is consisting in adding a frequency modulation to the optical carrier before adding the intensity data modulation (data rate B Gbit/s) and analyzing the phase shift experienced by the clock signal at B GHz during propagation using a PLL circuit. One of the main drawbacks of this solution lies in the fact that the PLL circuit has to be adjusted to the data rate. In addition, this solution requires high speed electronics.

In US 2004/0156038, a real time chromatic dispersion measurement arrangement using a novel technique based on spectrum analyses of dispersion distorted optical signals is disclosed. The dispersion measured is used to provide the feedback control signal for tunable dispersion compensation devices without requiring expensive bit-error rate monitoring.

European patent application EP 1 251 647 describes such an adjustable dispersion compensator with a feedback path. In the feedback path, the output signal of the dispersion compensator is passed through an optical filter and a power measuring means (photodiode) followed by a spectral analyzer with splits the signal into several paths, each passing through a different RF narrowband filter. The signals of the paths are used to set the dispersion of the compensator to the required value.

In US 2004/0000635, an arrangement for automatically adjusting for accumulated chromatic dispersion by means of a dispersion variation-based measuring arrangement is disclosed. The measuring arrangement adds a small amount of additional dispersion to a received optical signal for nonlinear detection of both amplitude and sign of the dispersion present in the received signal. This information is then fed back to a tunable dispersion compensator to provide real-time, automatic correction to the dispersion present in the system.

Chromatic dispersion consists of linear chromatic dispersion (a measure of the rate of change of group delay with wavelength, typically measured in picoseconds per nanometer) and higher order terms due to the fact that linear chromatic dispersion is generally itself a function of wavelength. As such nonlinear effects may arise during propagation in real systems, the optimized value of linear chromatic dispersion after the compensation (called residual chromatic dispersion) is generally different from zero.

Object of the invention

It is the object of the invention to provide an optical receiver and a method for compensating chromatic dispersion irrespective of the data-rate and to provide an easy way of monitoring residual chromatic dispersion.

Brief description of the invention

This object is achieved by an optical receiver of the above-mentioned kind, within which the analysis filter has a transmission frequency range detuned with respect to a fundamental frequency of the dispersion probe signal.

The approach of the invention is to extract a feedback control signal for driving the dispersion compensation module or a monitoring signal for determining the value of residual chromatic dispersion from a measured average power of the dispersion probe signal after propagation through the nonlinear optical element (e.g. a highly nonlinear fiber). This approach is only dependent on the predefined data sequence, can be applied at any data rate and does not require to superpose any monitoring signal on the data signal. Moreover, it does not require any high speed electronics: the feedback or monitoring signal may be extracted from a low-speed optical power measuring apparatus by a simple optical power measurement.

The invention makes use of the fact that the pulse of the data probe signal is broadened due to the chromatic dispersion during transmission. The average optical power in the transmission range of the analysis filter is a measure for spectral broadening of the transmission probe signal. If the chromatic dispersion compensation is optimized after transmission, the pulses recover their initial pulse shape. Conversely, the pulse shape will be enlarged in the case of non-optimized dispersion compensation. When comparing the pulse peak power between the different cases, the pulse peak power will be maximum when the temporal pulse width will be minimum, that is in the case of optimized dispersion compensation.

Considering now that the pulses are launched in a nonlinear optical element after transmission, spectral broadening induced by propagation through the nonlinear optical element will be dependent on the incoming pulse peak power. The larger the peak power is, the larger the spectral broadening is. Hence, by measuring the average power of a pulse stream of the dispersion probe signal in a predetermined frequency range, one obtains an image of the temporal shape of the incoming pulse.

In a preferred embodiment the dispersion compensation module and the power measuring means are connected by a feedback path so that the amount of chromatic dispersion can be modified in such a way that the average power is maximized. Thanks to a relation linking the spectral broadening inside the nonlinear optical element to chromatic dispersion, maximizing the optical power of the dispersion probe signal after passing through a nonlinear optical element is equivalent to optimizing the chromatic dispersion compensation.

In a preferred modification of this embodiment, the power measuring means comprises an optical/electrical converter for converting an optical input signal to the measuring means into an electrical output signal of the measuring means. In this way, an electrical input signal to the dispersion compensation module can be generated, so that adjusting of the dispersion compensation module is simplified.

In a preferred embodiment a residual dispersion monitoring means for calculating an amount of chromatic dispersion of the optical probe signal due to nonlinear effects in the optical network is connected to the dispersion compensation module and the power measuring means. The residual chromatic dispersion can be calculated by comparing an average optical power distribution of the actual transmitted dispersion probe signal with an average optical power distribution of a dispersion probe signal with a simulated linear transmission through the optical network.

In a further preferred embodiment, a selective filter for selecting a channel of the optical probe signal is arranged in the dispersion measuring path upstream of the nonlinear optical element. Such an arrangement is advantageous when the optical network consists of multiple channels of mutually different wavelengths, such as in wavelength division multiplexing (WDM) systems.

In a preferred embodiment an amplifier for amplifying optical signals transmitted through the optical network is arranged in a transmitting path downstream of the dispersion compensation module and an optical splitter for branching part of the dispersion probe signal from the transmitting path to the dispersion measuring path is arranged in the transmitting path downstream of the amplifier. A part of the dispersion probe signal is branched to the dispersion measuring path after amplification, whereas most of the signal passes through the transmitting path for further analysis.

The invention is also realized in a method for compensating and/or monitoring chromatic dispersion of optical signals transmitted through an optical network, comprising the subsequent steps of: generating a dispersion probe signal at a first site of the optical network, transmitting the dispersion probe signal through the optical network from the first site to a second site, adjusting an amount of chromatic dispersion of the dispersion probe signal at the second site, propagating the dispersion probe signal through a nonlinear optical element, passing the propagated dispersion probe signal through an analysis filter having a transmission frequency range detuned with respect to a fundamental frequency of the dispersion probe signal, and measuring an average optical power of the dispersion probe signal passed through the analysis filter over a predetermined frequency range.

In a preferred variant, the amount of chromatic dispersion of the dispersion probe signal is adjusted so that the average optical power of the dispersion probe signal is maximized. In this way, the optimized dispersion value for the compensation is adjusted by the dispersion compensation means.

In a further preferred variant, an amount of residual chromatic dispersion is calculated by comparing an average optical power distribution of the dispersion probe signal transmitted through the optical network with an average optical power distribution of a dispersion probe signal of a simulated linear transmission through the optical network.

Supposing a linear transmission of the dispersion probe signal through the optical network, the maximum power of the dispersion probe signal would be measured for zero chromatic dispersion and the dispersion compensation module would exactly compensate for chromatic dispersion cumulated during propagation through the optical network. However, due to nonlinear effects in the optical network, the optimized dispersion value (residual dispersion) for the compensation differs from zero. The residual dispersion can be measured by comparing the shape of the two average power distributions of the optical probe signals transmitted with respectively without nonlinear effects through the optical network. The simulation of a linear transmission through the optical network is possible as the shape of the dispersion probe signal before transmission is known.

Further advantages may be extracted from the description and the enclosed drawings. The features mentioned above and below may be used in accordance with the invention either individually or collectively in any combination.

The embodiments mentioned are not to be understood as an exhaustive enumeration but rather have an exemplary character for the

description of the invention.

Drawings

The invention is shown in the drawings, wherein:

Fig. 1    shows an transmission system with an optical receiver in accordance with the invention,

Fig. 2    shows an optical power distribution as a function of linear chromatic dispersion, and

Fig. 3    shows two optical power distributions as a function of linear chromatic dispersion with respectively without nonlinear effects during transmission.

Description of preferred embodiments

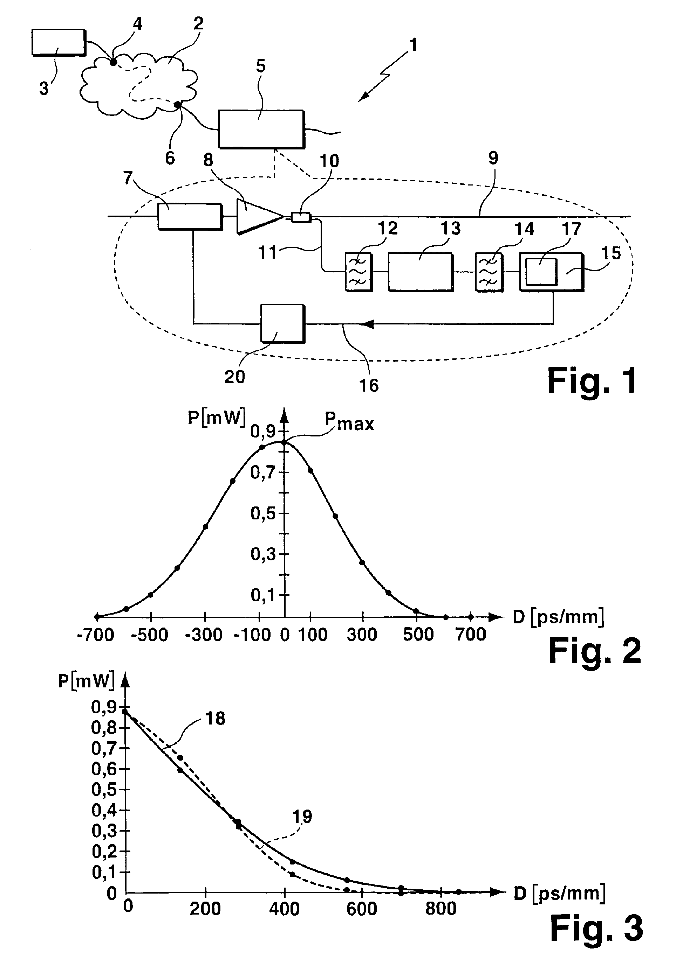

**Fig. 1** shows a transmission system **1** which consists of an optical network **2** being disposed between an optical emitter **3** being branched to a first site **4** of the optical network 2 and an optical receiver **5** being branched to a second site **6** of the optical network 2.
The components of the optical receiver 5 are represented inside of the dashed region of Fig. 1. The optical receiver 5 comprises a dispersion compensation module **7** (DCM) based on a thermally adjustable chirped fiber grating upstream of an erbium doped fiber amplifier **8** in a transmission path **9**. Downstream of the amplifier 8 an optical splitter **10** is placed in the transmission path 9 which branches part of optical signals transmitted through the transmission path 9 into a measuring path **11.**
The measuring path 11 comprises one after another: a selective filter **12** for channel selection, a 4 km-long nonlinear fiber having an effective area of $30\mu$ m$^2$ as a nonlinear optical element **13,** an analysis filter **14** detuned with respect to the carrier of a dispersion probe signal (DPS) and a power meter as a power measuring means **15.** For the optical filters 12, 14, no stringent specifications are required: the features of the selective filter 12 are dependent on the channel spacing, while a 1 nm-bandwidth optical filter is necessary for the analysis filter 14. It is also possible to realize channelized chromatic dispersion monitoring by using two tunable filters (DPS extraction, analyze filter), and a laser tunable to the DPS. For the nonlinear optical element 13, other nonlinear media might be used (SOA, photonic crystals, etc.).
The power measuring means 15 and the dispersion compensation module 7 are connected by a feedback path **16.** The power measuring means 15 is built up by cheap low-speed electronics (MHz frequency range) and comprises a photodiode as an optical/electrical converter **17** for converting an optical output signal of the analysis filter 14 into an electrical input signal for the dispersion compensation module 7. A dispersion monitoring means **20** is also arranged in the feedback path 16.
In the following, the functional principle of the transmission system 1 is described.
The emitter 3 generates a low bit-rate optical signal (312.5 MHz) composed of Gaussian shape pulses with 50 ps full width at half maximum (FWHM) as a dispersion probe signal. The DPS is generated using a tuneable laser as to analyse the different components of a wavelength division multiplexing (WDM) signal and followed by a modulator as to generate the intensity modulation. The optical power of the DPS is chosen such that it is at 10 dBm when launched inside the nonlinear optical element 13. The optical power may be reduced by using a highly nonlinear medium (highly nonlinear fiber, SOA, photonic crystal) as nonlinear optical element 13.
The optical probe signal is transmitted through the optical network 2 from the first site 4 to the second site 6. The dispersion probe signal entering the optical receiver 5 is passing through the chromatic dispersion compensation module 7. A part of the dispersion probe signal is extracted after being amplified and launched in the nonlinear optical element 13. The selective filter 12 is used to select the channel of the DPS to be controlled. The spectral broadening induced during propagation in the nonlinear optical element 13, defined as the spectral width $\Delta\omega_{rms}$ after propagation divided by the spectral width $\Delta\omega_0$ before propagation, is given by the following equation

$$\frac{(\Delta\omega)_{rms}}{(\Delta\omega)_{0}} = \sqrt{1 + \frac{4}{3\sqrt{3}}\phi^2_{max}} \quad [1]$$

and can be deduced from the measurement of the average optical power that is carried out at the output of the detuned analysis filter 14. As seen from equation [1], there is a linear relation between the spectral broadening $\Delta\omega_{rms}/\Delta\omega_0$ and the term $\Phi_{max}$ (<1) which is proportional to a pulse peak power $P_{peak}$ of the incoming dispersion probe signal. In addition, equation [2]

$$\frac{T_1}{T_0} = \sqrt{\left(1 + \frac{c\beta_2 Z}{T_0}\right)^2 + \left(\frac{\beta_2 Z}{T_0^{\ 2}}\right)^2} \quad [2]$$

details the temporal pulse width broadening being defined as the quotient of a temporal pulse width $T_1$ after transmission through the optical network 2 and a temporal pulse width $T_0$ before transmission. The term $\beta_2$ is proportional to chromatic dispersion and Z designates the wave resistance of a transmission line in the optical network 2.

Because the peak power decreases when the temporal pulse width increases, one can deduce from equation [1] that the pulse broadening will be low when the chromatic dispersion is not optimized. Accordingly, the signal provided by the power measuring means 15 after filtering will be low for non-optimized chromatic dispersion. Therefore, the output signal of the power measuring means 15 can be used to drive the DCM 7 such that it adapts the amount of chromatic dispersion of the optical probe signal so that the average optical power measured by the measuring means 15 is maximized. When this is the case, an optimal chromatic dispersion compensation is achieved.

**Fig. 2** shows a distribution of the average power **P** (measured at the output of the analysis filter 14) in mW versus chromatic dispersion **D** in ps/nm which can be obtained by detuning the DCM 7. The maximum of the average optical power $P_{max}$ defines the point where the chromatic dispersion D is zero. This point corresponds to the case when the DCM 7 exactly compensates for the chromatic dispersion caused by transmission through the optical network 2.

The above reasoning is true if there are no nonlinear effects present in the optical network 2. In real transmission systems, the optimized linear chromatic dispersion value for the compensation (called residual dispersion) differs from zero due to nonlinear effects arising during propagation.

For an evaluation of the impact of a nonlinear transmission, **Fig. 3** shows a first distribution **18** of optical power P after the analysis filter 14 for a real transmission and a second distribution **19** of a simulated transmission without nonlinear effects. One observes that the impact of the nonlinear effects is low. Therefore, the principle that is consisting in measuring a maximum average power remains still valid even in presence of nonlinear effects during propagation in the transmission system.

It is important to mention that the difference between the shape of the first distribution 18 and the second distribution 19 may be used in order to monitor the value of the residual chromatic dispersion. In order to do the necessary calculations, the residual dispersion monitoring means 20 is connected to the DCM 7 and the power measuring means 15. As the shape of the DPS is known, the values necessary for the calculations can be stored in a table.

For residual dispersion values lower than 400 ps/nm, one can estimate the absolute value of the residual chromatic dispersion with an accuracy better than 40 ps/nm. The measurement accuracy can be improved by using a dispersion probe signal with a FWHM lower than 50 ps, but at the price of a reduction of the dispersion operation range. Conversely, one can increase the dispersion operation range by increasing the FWHM.

**Claims**

1. Optical receiver (5) for an optical network (2), comprising:

a dispersion compensation module (7) for adjusting an amount of chromatic dispersion of optical signals transmitted through the optical network (2),

a nonlinear optical element (13) for spectral broadening of a dispersion probe signal transmitted through the optical network (2) arranged in a dispersion measuring path (11) downstream of the dispersion compensation module (7), and

a power measuring means (15) for measuring an average power (P) of the optical dispersion probe signal over a predetermined frequency range arranged downstream of the nonlinear optical element (13) in the dispersion measuring path (11), and

an analysis filter (14) placed between the nonlinear optical element (13) and the power measuring means (15),

**characterized in that**
the analysis filter (14) has a transmission frequency range detuned with respect to a fundamental frequency of the dispersion probe signal.

2.  Optical receiver according to claim 1, **characterized in that** the dispersion compensation module (7) and the power measuring means (15) are connected by a feedback path (16) so that the amount of chromatic dispersion can be modified in such a way that the average power is maximized.

3.  Optical receiver according to claim 2, **characterized in that** the power measuring means (15) comprises an optical/electrical converter (17) for converting an optical input signal to the measuring means (15) into an electrical output signal of the measuring means (15).

4.  Optical receiver according to claim 1, **characterized in that** a residual dispersion monitoring means (20) for calculating an amount of chromatic dispersion of the optical probe signal due to nonlinear effects in the optical network (2) is connected to the dispersion compensation module (7) and the power measuring means (15).

5.  Optical receiver according to claim 1, **characterized in that** a selective filter (12) for selecting a channel of the optical probe signal is arranged in the dispersion measuring path (11) upstream of the nonlinear optical element (13).

6.  Optical receiver according to claim 1, **characterized in that** an amplifier (8) for amplifying optical signals transmitted through the optical network (2) is arranged in a transmitting path (9) downstream of the dispersion compensation module (7) and that an optical splitter (10) for branching part of the dispersion probe signal from the transmitting path (9) to the dispersion measuring path (11) is arranged in the transmitting path (9) downstream of the amplifier (8).

7.  Method for compensating and monitoring chromatic dispersion of optical signals transmitted through an optical network (2), comprising the subsequent steps of:

    generating a dispersion probe signal at a first site (4) of the optical network,
    transmitting the dispersion probe signal through the optical network from the first site (4) to a second site (6),
    adjusting an amount of chromatic dispersion of the dispersion probe signal at the second site (6),
    propagating the dispersion probe signal through a nonlinear optical element (13),

    said method **characterized by** comprising the subsequent steps of
    passing the propagated dispersion probe signal through an analysis filter (14) having a transmission frequency range detuned with respect to a fundamental frequency of the dispersion probe signal, and
    measuring an average optical power (P) of the dispersion probe signal passed through the analysis filter (14) over a predetermined frequency range.

8.  Method according to claim 7, **characterized in that** the amount of chromatic dispersion of the dispersion probe signal is adjusted such that the average optical power (P) of the dispersion probe signal is maximized.

9.  Method according to claim 7, **characterized in that** an amount of residual chromatic dispersion is calculated by comparing an average optical power distribution (18) of the dispersion probe signal transmitted through the optical network (2) with an average optical power distribution (19) of a dispersion probe signal of a simulated linear transmission through the optical network (2).

**Patentansprüche**

1. Optischer Empfänger (5) für ein optisches Netzwerk (2), das Folgendes umfasst: Dispersionskompensationsmodul (7) zum Anpassen eines Betrags chromatischer Dispersion der über das optische Netzwerk (2) übertragenen optischen Signale, nichtlineares optisches Element (13) zur Spektralaufweitung eines über das optische Netzwerk (2) übertragenen Dispersions-Sensorsignals, wobei dieses Element entlang eines Dispersionsmessungspfads (11) in Downstream-Richtung hinter dem Dispersionskompensationsmodul (7) angeordnet ist, und Leistungsmessungsmittel (15) zur Messung einer durchschnittlichen Leistung (P) des optischen Dispersions-Sensorsignals über einen vorgegebenen Frequenzbereich, die entlang des Dispersionsmessungspfads (11) in Downstream-Richtung hinter dem nichtlinearen optischen Element (13) angeordnet sind, und Analysefilter (14), der zwischen dem nichtlinearen optischen Element (13) und den Leistungsmessungsmitteln (15) angeordnet ist, **dadurch gekennzeichnet, dass** der Analysefilter (14) einen Übertragungsfrequenzbereich aufweist, der hinsichtlich einer Basisfrequenz des Dispersions-Sensorsignals verstimmt ist.

2. Optischer Empfänger nach Anspruch 1, **dadurch gekennzeichnet, dass** das Dispersionskompensationsmodul (7) und die Leistungsmessungsmittel (15) über einen Rückmeldungspfad (16) miteinander verbunden sind, sodass der Betrag der chromatischen Dispersion so geändert werden kann, dass die Durchschnittsleistung maximiert wird.

3. Optischer Empfänger nach Anspruch 2, **dadurch gekennzeichnet, dass** die Leistungsmessungsmittel (15) einen Optik/Elektrik-Wandler (17) zum Umwandeln eines optischen Eingangssignals der Messungsmittel (15) in ein elektrisches Ausgangssignal der Messungsmittel (15) umfassen.

4. Optischer Empfänger nach Anspruch 1, **dadurch gekennzeichnet, dass** Mittel zur Überwachung der Restdispersion (20) für die Berechnung eines Betrags der chromatischen Dispersion des optischen Sensorsignals wegen der nichtlinearen Effekte im optischen Netzwerk (2) mit dem Dispersionskompensationsmodul (7) und den Leistungsmessungsmitteln (15) verbunden sind.

5. Optischer Empfänger nach Anspruch 1, **dadurch gekennzeichnet, dass** ein selektiver Filter (12) zur Auswahl eines Kanals des optischen Sensorsignals im Dispersions-Messungspfad (11) in Upstream-Richtung vom nichtlinearen optischen Element (13) angeordnet ist.

6. Optischer Empfänger nach Anspruch 1, **dadurch gekennzeichnet, dass** ein Verstärker (8) zur Verstärkung optischer Signale, die über das optische Netzwerk (2) übertragen werden, in einem Übertragungspfad (9) in Downstream-Richtung vom Dispersionskompensationsmodul (7) angeordnet ist und dass ein optischer Splitter (10) zur Verzweigung eines Teils des Dispersions-Sensorsignals vom Übertragungspfad (9) an den Dispersions-Messungspfad (11) im Übertragungspfad (9) in Downstream-Richtung vom Verstärker (8) angeordnet ist.

7. Verfahren zur Kompensation und Überwachung der chromatischen Dispersion optischer Signale, die über ein optisches Netzwerk (2) übertragen werden, das die folgenden Schritte umfasst:

   Erzeugen eines Dispersions-Sensorsignals an einem ersten Standort (4) des optischen Netzwerks,
   Übertragen des Dispersions-Sensorsignals über das optische Netzwerk vom ersten Standort (4) an einen zweiten Standort (6),

   Einstellen eines Betrags für die chromatische Dispersion des Dispersions-Sensorsignals am zweiten Standort (6),
   Ausbreitung des Dispersions-Sensorsignals über ein nichtlineares optisches Element (13), wobei dieses Verfahren **dadurch gekennzeichnet ist, dass** es die folgende Schritte umfasst:

   Weiterleiten des ausgebreiteten Dispersions-Sensorsignals über einen Analysefilter (14) mit einem Übertragungsfrequenzbereich, der hinsichtlich einer Basisfrequenz des Dispersions-Sensorsignals verstimmt ist, und
   Messen einer optischen Durchschnittsleistung (P) des Dispersions-Sensorsignals, das über einen vorgegebenen Frequenzbereich durch den Analysefilter (14) geleitet wurde.

8. Verfahren nach Anspruch 7, **dadurch gekennzeichnet, dass** der Betrag der chromatischen Dispersion des Dispersions-Sensorsignals so eingestellt wird, dass die durchschnittliche optische Leistung (P) des Dispersions-Sensorsignals maximiert wird.

9. Verfahren nach Anspruch 7, **dadurch gekennzeichnet, dass** ein Betrag der chromatischen Restdispersion berechnet wird durch den Vergleich einer durchschnittlichen optischen Leistungsverteilung (18) des über das optische Netzwerk (2) übertragenen Dispersions-Sensorsignals mit einer durchschnittlichen optischen Leistungsverteilung (19) eines Dispersions-Sensorsignals einer simulierten linearen Übertragung über das optische Netzwerk (2).

## Revendications

1. Un récepteur optique (5) pour un réseau optique (2) comprenant :

   un module (7) de compensation de la dispersion pour régler un volume de dispersion chromatique de signaux optiques transmis par le réseau optique (2).
   Un élément optique non linéaire (13) pour l'élargissement du spectre d'un signal de la sonde de dispersion transmis par le réseau optique (2) organisé en un chemin (11) de mesure de la dispersion en aval du module (7) de compensation de la dispersion, et
   Un dispositif (15) de mesure de la puissance pour mesurer une puissance moyenne (P) du signal de la sonde de dispersion optique dans une plage de fréquences prédéterminées organisée en aval de l'élément optique non linéaire (13) dans le chemin (11) de mesure de la dispersion, et
   Un filtre d'analyse (14), placé entre l'élément optique non linéaire (13) et le dispositif de mesure de la puissance (15),

   **Caractérisé par le fait que**
   Le filtre d'analyse (14) dispose d'une plage de fréquences de transmission désaccordée par rapport à la fréquence fondamentale du signal de la sonde de dispersion.

2. Un récepteur optique conformément à la revendication 1, **caractérisé par le fait que** le module (7) de compensation de la dispersion et le dispositif (15) de mesure de la puissance sont reliés par un chemin de feedback (16) afin que le volume de dispersion chromatique puisse être modifié afin que la puissance moyenne soit maximisée.

3. Un récepteur optique conformément à la revendication 2 **caractérisé par le fait que** le dispositif (15) de mesure de la puissance comprend un convertisseur (17) optique/électrique pour convertir un signal d'entrée optique vers le dispositif (15) de mesure en un signal de sortie électrique du dispositif (15) de mesure.

4. Un récepteur optique conformément à la revendication 1, **caractérisé par le fait qu'**un dispositif (20) de contrôle de la dispersion résiduelle permettant de calculer un volume de dispersion chromatique du signal de la sonde optique résultant des effets non linéaires dans le réseau optique (2) est relié au module (7) de compensation de la dispersion et au dispositif (15) de mesure de la puissance.

5. Un récepteur optique conformément à la revendication 1, **caractérisé par le fait qu'**un filtre sélectif (12) permettant de sélectionner un canal du signal de la sonde optique est installé dans le chemin (11) de mesure de la dispersion en amont de l'élément optique non linéaire (13).

6. Un récepteur optique conformément à la revendication 1, **caractérisé par le fait qu'**un amplificateur (8) permettant d'amplifier les signaux locaux transmis par le réseau optique (2) est installé dans un chemin de transmission (9) en aval du module (7) de compensation de la dispersion et qu'un répartiteur optique (10) permettant de brancher une partie du signal de la sonde de dispersion du chemin de transmission (9) vers le chemin de mesure de la dispersion (11) est installé dans le chemin de transmission (9) en aval de l'amplificateur (8).

7. Méthode de compensation et de contrôle de la dispersion chromatique des signaux optiques transmis par un réseau optique (2) comprenant les étapes suivantes de :

   génération d'un signal de la sonde de dispersion à un premier site (4) du réseau optique,
   transmission du signal de la sonde de dispersion par le réseau optique depuis le premier site (4) vers un second site (6),
   réglage du volume de dispersion chromatique du signal de la sonde de dispersion au second site (6),
   propagation du signal de la sonde de dispersion par un élément optique non linéaire (13), cette méthode étant **caractérisée par** les étapes suivantes de :

passage du signal de la sonde de dispersion propagé par un filtre d'analyse (14) dont la plage de fréquences de transmission est désaccordée par rapport à une fréquence fondamentale du signal de la sonde de dispersion et, mesure d'une puissance optique moyenne (P) du signal de la sonde de dispersion passée par le filtre d'analyse (14) dans une plage de fréquences prédéterminées.

8. Une méthode conformément à la revendication 7, **caractérisée par le fait que** le volume de dispersion chromatique du signal de la sonde de dispersion est réglé pour que la puissance optique moyenne (P) du signal de la sonde de dispersion soit maximisée.

9. Une méthode, conformément à la revendication 7, **caractérisé par le fait qu'**un volume de dispersion chromatique résiduelle est calculé en comparant une distribution (18) de puissance optique moyenne du signal de la sonde de dispersion transmis par le réseau optique (2) avec une distribution moyenne de puissance optique (19) du signal de la sonde de dispersion d'une transmission linéaire simulée par le réseau optique (2).

**Fig. 1**

**Fig. 2**

**Fig. 3**